# FASCICULE DE BREVET EUROPEEN

(11) **EP 1 232 361 B1**
(45) Date de publication et mention de la délivrance du brevet: **07.05.2008**
(21) Numéro de dépôt: 00983381.5
(22) Date de dépôt: 17.11.2000
(51) Int. Cl.: F16L 59/02, F16L 59/06

(54) **COMPLEXE TUBULAIRE ISOLANT POUR CONDUITE**
KOMPLEXE ROHRFÖRMIGE ISOLIERUNG FÜR LEITUNGEN
INSULATING TUBULAR COMPLEX FOR PIPES

(30) Priorité: 22.11.1999 FR 9914700
(43) Date de publication de la demande: 21.08.2002
(73) Titulaire: SAIPEM S.A., 78180 Montigny-le-Bretonneux (FR)
(72) Inventeur: CHENIN, Laurent, F-78320 Le Mesnil Saint Denis (FR); PIONETTI, François-Régis, F-75017 Paris (FR); ROCHER, Xavier, F-78400 Chatou (FR); BERTRAND, Eric, B-1310 La Hulpe (BE); RANDALL, David, B-3078 Everberg (BE)
(74) Mandataire: Domange, Maxime
(86) Numéro de dépôt international: PCT/FR2000/003200
(87) Numéro de publication internationale: WO 2001/038779

(56) Documents cités:
- EP-A- 0 555 170
- GB-A- 291 644
- US-A- 4 287 011
- US-A- 5 006 185
- US-A- 5 798 154
- US-A- 5 843 353

## Description

La présente invention concerne un système d'isolation pour tout type de conduite notamment des conduites sous-marines véhiculant des fluides chauds ou froids. La présente invention concerne plus particulièrement un complexe tubulaire isolant -apte à être placé dans l'espace entre deux conduites coaxiales comprenant une conduite interne et une conduite externe, de préférence des conduites sous-marines destinées aux grandes profondeurs.

Elle s'applique en particulier aux conduites sous-marines installées sur les champs pétroliers par très grandes profondeurs, ainsi qu'aux conduites en suspension entre le fond de la mer et un navire de surface ancré sur ledit champ pétrolier.

Elle s'applique aussi dans les domaines de l'aéronautique et de l'industrie spatiale où la notion de poids est de prime importance.

Dans la majorité des domaines industriels on recherche des systèmes d'isolation performants pour maintenir les fluides véhiculés dans les tuyauteries à température constante, de manière à ce que les transferts entre équipements puissent être rendus possibles sur des distances importantes, atteignant par exemple plusieurs centaines de mètres, voire plusieurs kilomètres. De telles distances sont courantes dans les industries telles que les raffineries de pétrole, les installations de gaz naturel liquéfié (-165°C), les champs pétroliers sous-marins lesquels s'étendent sur plusieurs dizaines de kilomètres. De tels champs pétroliers sont développés par des profondeurs d'eau de plus en plus importantes laquelle peut atteindre et dépasser 3000m.

De nombreux systèmes ont été développés pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant de 1 bar pour 10m de profondeur, la pression à laquelle doit résister la conduite est alors de 100 bars pour 1000m de profondeur et de 300 bars pour 3000m.

Les technologies les plus performantes qui ont été développées pour atteindre cet objectif sont les technologies dites "Pipe In Pipe" ou PIP, c'est à dire "conduite dans une conduite", dans laquelle une conduite interne véhicule le fluide et une conduite externe coaxiale à la précédente est en contact avec le milieu ambiant, c'est à dire l'eau. L'espace annulaire entre les deux conduites peut être rempli d'un matériau isolant ou encore être vidé de tout gaz.

Dans le cas d'utilisation d'un matériau isolant de type mousse de polyuréthane, les épaisseurs nécessaires sont en général importantes, par exemple 5 ou 10 cm, ce qui nécessite l'utilisation d'une conduite extérieure de fort diamètre. Or, cette conduite doit résister à la pression du fond sans imploser ce qui implique un surcroît d'épaisseur d'acier pour tenir à la pression et un surcroît de surface d'acier en raison de l'accroissement du diamètre. De plus, l'espace annulaire rempli de mousse crée un flottabilité supplémentaire que l'on est souvent obligé de compenser par augmentation du poids de la conduite, qui est souvent obtenu par augmentation de l'épaisseur de la conduite externe. Ainsi, bien souvent, le dimensionnement de la conduite externe est gouverné par des considération de non-flottabilité de l'ensemble PIP, plus que par la nécessité de résister à la pression de fond.

Pour palier cet inconvénient, des technologies beaucoup plus performantes ont été développées, dans lesquelles on cherche à minimiser l'espace annulaire entre conduites, en particulier avec la création d'un vide dans la zone interstitielle. En effet le vide ainsi créé est alors un excellent isolant, et un espace annulaire de 5 à 10 mm est suffisant. Le PIP est alors comparable en termes de performances aux "bouteilles thermos" en verre connues de tout un chacun. Pour améliorer l'isolation, on limite en outre le rayonnement en enveloppant la partie externe de la conduite interne d'un film réfléchissant, en général constitué d'un film aluminium éventuellement associé à des matériaux thermoplastiques.

Les conduites sont alors préfabriquées en longueurs unitaire de 6 à 12 m puis, lors de la pose assemblées les unes aux autres pour former une liaison continue. En cas d'endommagement d'une ou plusieurs longueurs de PIP, il se crée alors des ponts thermiques qui, s'ils restent ponctuels et en nombre limité n'ont pas de répercussions significatives sur le comportement de la conduite, laquelle continue en général à assurer sa fonction dans le temps.

Les conduites ainsi réalisées dans la technologie PIP basées sur un vide poussé présentent cependant l'inconvénient suivant. Le fluide en provenance des puits sous-marins est un mélange de pétrole brut, d'eau, de gaz et de composés agressifs divers tels le CO2 et l'H2S. La conduite interne, réalisée en général en acier au carbone, est sujette à des phénomènes de corrosion dus au fluide et qui ont pour conséquence de produire de l'hydrogène atomique H+, ce dernier ayant tendance à migrer sous forme atomique à travers la matrice de fer et de carbone de l'acier, pour venir se recombiner, sur la paroi externe de la conduite intérieure, donc dans l'espace annulaire entre les deux conduites coaxiales, pour former du gaz hydrogène de formule H2. Le vide créé dans cet espace annulaire se dégrade alors en raison de l'augmentation de la pression d'hydrogène, lequel est un excellent conducteur de la chaleur, ce qui va à l'encontre de l'objectif visé.

Divers moyens ont été développés pour palier cet inconvénient. Un moyen connu consiste en l'introduction dans l'espace annulaire d'un composé connu sous le nom de "getter", dont la fonction est d'absorber ledit hydrogène gazeux pour maintenir la pression partielle d'hydrogène au plus bas et ainsi conserver le niveau de vide souhaitable pendant toute la durée de vie du champ, laquelle peut dépasser 20 ans. Le "getter" est introduit lors de la fabrication du PIP et avant le scellement définitif après la mise sous vide,

Il a aussi été envisagé d'utiliser, pour la conduite intérieure au moins, des aciers résistant à la corrosion, tels des inox ou du duplex, mais les conduites deviennent alors extrêmement coûteuses et ne constituent en général pas une solution acceptable sur le plan, économique.

Il est également courant de revêtir l'intérieur de la conduite d'un film protecteur, par exemple de type époxy, dont la fonction est d'éviter le contact entre les agents corrosifs et l'acier au carbone. Toutefois, au droit des raboutages de conduites effectués sur site, le procédé de soudage détruit localement cette protection et crée des zones sujettes à corrosion. De plus, en cas d'endommagement de ce revêtement par le passage d'outils de nettoyage ou encore par abrasion due au sable véhiculé en même temps que les effluents, la surface risque de se dégrader dans le temps et le phénomène de migration d'hydrogène atomique de s'amplifier avec le temps.

On connaît par ailleurs la technologie développée dans le domaine des équipements électro-ménagers basée sur la réalisation de panneaux plans constitués d'une matière micro-poreuse confinée dans une enveloppe constituée d'un film, en général thermosoudé à ses extrémités, dans lequel on crée, préalablement au scellement définitif, un vide poussé, c'est à dire de l'ordre de 1 millibar ou moins. Le film est un complexe multicouches comportant une barrière constituée, en général, d'un film d'aluminium continu associé par collage ou adhérisation à des films thermoplastiques, ces derniers permettant d'assurer le scellement de l'ensemble. De tels films sont couramment utilisés dans le domaine agroalimentaire pour conserver sous atmosphère neutre ou sous vide des produits tels que le lait, les jus de fruits et le café.

On a proposé dans la demande internationale WO96/32605 de réaliser des panneaux présentant une surface à trois dimensions par pliage de panneaux plans de mousse de polyuréthane, dans lesquels on a réalisé des sillons. Toutefois, la réalisation de panneaux tubulaires n'est pas décrite. En tout état de cause, ce mode de formation de surface courbe par pliage de panneaux plans le long de sillons ne permet pas de minimiser l'espace occupé par le panneau.

L'objectif d'une isolation performante est de limiter les transferts de calories par conduction, convection et rayonnement et de créer des écrans réflecteurs dont la fonction sera de renvoyer les rayonnements énergétiques. La limitation de la conduction peut être obtenue par appauvrissement des molécules en présence, responsables desdits transferts caloriques, ou encore par piégeage des molécules au sein de structures organisées dont le diamètre des cavités est du même ordre que la longueur d'onde des rayonnements à confiner. Ainsi, les rayonnements franchissant ce genre de structure se trouvent piégés localement, car au lieu de traverser directement le médium, leur parcours est réfléchi de cellule en cellule et la vitesse moyenne de transfert se trouve divisé par 10, voire plus. De tels matériaux sont connus sous le nom de nano-matériaux car leurs structure de base crée des cellules, certes communicantes, mais dont la taille des cavités est de l'ordre du nanomètre. De tels produits, appelés dans une variante aérogels, sont produits par la Société Monsanto (USA).

Un état de la technique selon le préambule de la revendication est connue de US-A-57 38 154.

Ainsi le problème posé est de fournir un système d'isolation à hautes performances pouvant être utilisé dans une grande variété d'applications et de répondre en particulier aux conditions rencontrées dans les développements de champs pétroliers en mer profonde.

En outre, les exigences en matière d'isolation thermique requises selon la présente invention sont :
- une isolation de très haute performance correspondant à des valeurs de coefficient de transfert thermique de l'ordre de quelques milliwatts,
- une isolation de faible encombrement pour pouvoir se loger dans des espaces confinés réduits (c'est le cas dans l'aérospatiale, l'aéronautique, le pétrole en mer ou à terre),
- une isolation thermique légère pour ne pas perturber et/ou alourdir la structure primaire à isoler (l'isolation ne doit pas induire dés efforts et des contraintes hors normes),
- une isolation thermique facile d'emploi et adaptable à toutes les formes de tuyauterie,
- une isolation thermique couvrant une large gamme de température depuis les basses températures (- 100°C ou moins) jusqu'aux températures élevées (de l'ordre de 150°C),
- une isolation thermique d'une durée de vie de l'ordre de 20 ans et pouvant être certifiée ou répondant à des réglementations administratives.

Pour ce faire, la présente invention fournit un complexe tubulaire isolant apte à être placé autour d'une conduite, selon la revendication 1.

La paroi interne correspond à la paroi de l'enveloppe placée contre la conduite, notamment la conduite interne dans le cas où le complexe tubulaire est placé dans l'espace entre deux conduites coaxiales. De même, la paroi externe correspond à la paroi de l'enveloppe placée de l'autre côté dudit matériau isolant sur sa face externe libre ou contre la face intérieure de la conduite externe lorsque le complexe tubulaire est placé dans l'espace entre 2 conduites coaxiales.

Lesdites extrémités opposées du complexe tubulaire et lesdits bords respectifs des parois interne et externe dans la direction longitudinale XX' dudit complexe présentent une forme circulaire et cylindrique dont l'axe correspond à ladite direction longitudinale.

Plus particulièrement, lesdites extrémités opposées dans ladite direction longitudinale XX' dudit complexe tubulaire sont constituées chacune par les bords respectifs des faces internes à l'enveloppe de chacune desdites parois scellés l'un contre l'autre.

La caractéristique selon laquelle le matériau isolant se présente sous forme de tube signifie que le matériau isolant est constitué par un matériau solide qui tient en forme par lui-même une fois appliqué et plus précisément sous une forme tubulaire.

Ledit tube de matériau isolant peut être réalisé en une seule pièce ou il peut comprendre plusieurs arc de tubes assemblés, notamment deux demi-tubes assemblés. Mais, ledit tube ou lesdits arcs de tubes assemblés est ou sont enveloppé(s) par une seule paroi externe et une seule paroi interne continues. De ce fait, lesdites parois externe et interne ne présentent pas de discontinuité pouvant générer des ruptures d'isolation autour de la conduite.

De préférence la pression à l'intérieur de l'enveloppe est inférieure à 5 millibars, de préférence encore inférieure à 1 millibar.

Avantageusement chaque paroi de la dite enveloppe forme une surface de révolution par rapport à un axe longitudinal XX', chaque paroi étant obtenue par scellage l'un contre l'autre, de préférence par collage ou thermosoudage, des deux bords longitudinaux opposés d'un film multicouche rectangulaire composant une même dite paroi, le raboutage se faisant le long d'une génératrice de la dite surface de révolution.

Dans un mode de réalisation lesdits deux bords longitudinaux opposés de la paroi sont scellés l'un contre l'autre sur la même face vers l'extérieur de l'enveloppe.

Ce sont donc les faces internes à l'enveloppe, c'est à dire tournées vers l'intérieur de l'enveloppe, qui sont scellées l'une contre l'autre. Ce mode de réalisation est plus particulièrement approprié lorsque le film multicouche constitutif des parois n'a pas la même composition sur chacune de ses faces, avec notamment seulement la face interne à l'enveloppe recouverte d'un liant scellable.

De préférence, lesdits bords longitudinaux opposés d'une même dite paroi, de préférence encore la paroi externe scellés l'un contre l'autre vers l'extérieur de l'enveloppe sont recouverts par un film multicouche additionnel de manière à recouvrir la tranche des dits bords raboutés l'un contre l'autre des dites parois.

Dans un autre mode de réalisation les deux bords longitudinaux de la paroi, de préférence la paroi interne sont scellés l'un contre l'autre, face intérieure à l'enveloppe de l'un contre face extérieure à l'enveloppe de l'autre.

Dans un premier mode de réalisation, lesdits bords respectifs des faces internes à l'enveloppe des parois interne et externe auxdites extrémités opposées scellés l'un contre l'autre, comprennent au moins un pli dans lesdits bords de la paroi externe, de préférence une pluralité de plis, de préférence encore régulièrement et symétriquement espacés le long de la circonférence desdites extrémités. Ainsi, dans la mesure où une partie des bords de la paroi externe sont repliés et scellés sur eux-mêmes, la surlongueur desdits bords de la paroi externe par rapport à ceux de la paroi interne n'engendre pas de risque de perte d'étanchéité de l'enveloppe.

Dans ce premier mode de réalisation, lesdites extrémités opposées et lesdits bords respectifs des parois interne et externe scellés l'un contre l'autre forment un cylindre de diamètre sensiblement identique au diamètre interne dudit tube de matériau isolant.

Dans un deuxième mode de réalisation, lesdits bords respectifs des faces internes à l'enveloppe des parois interne et externe, scellés l'un contre l'autre auxdites extrémités opposées dudit complexe, ne présentent pas de pli, et la paroi interne comprend des plis dans sa zone centrale en contact avec ladite conduite entre lesdites extrémités opposées.

Dans ce deuxième mode de réalisation, lesdits bords respectifs des parois interne et externe auxdites extrémités opposées forment un cylindre de diamètre supérieur à celui de la conduite interne, mais sensiblement identique au diamètre externe dudit tube de matériau isolant.

Pour réaliser les performances requises selon la présente invention, il faut une isolation thermique qui stoppe la convection. Il existe plusieurs types de matériaux isolants capables de réaliser ce phénomène.

Dans un mode de réalisation, le matériau isolant à l'intérieur de la dite enveloppe est un nano-matériau notamment un aérogel de silice ou d'oxyde de titane. Dans un autre mode de réalisation, le matériau isolant est une mousse de matériau synthétique micro-poreux.

L'un d'entre eux est la mousse polyuréthanne à cellules ouvertes. Les radiations thermiques dont la longueur d'onde est de l'ordre de quelques nanomètres sont piégées dans les cellules ouvertes elles-mêmes d'un diamètre de l'ordre de quelques nanomètres.

Pour améliorer les performances de ces matériaux de base, il est important de la vider du gaz qu'elle contient, en général l'air, pour limiter les échanges thermiques par contact au minimum. Dans le cas de la mousse de polyuréthane, lorsque la qualité du vide dans les cellules ouvertes de la mousse atteint une valeur inférieure à 1 millibars, le coefficient de transfert thermique tombe environ de 6 milliwatt/m/°C ce qui est à ce jour la valeur la plus faible obtenue pour tout type de matériaux.

Le vide est maintenu à ce niveau de valeur sur 20 ans grâce à un film thermoplastique soudé qui empêche ou limite l'intrusion de gaz (H2, CO2, etc...) au minimum grâce à un film métallique (aluminium en général). Ce film est structuré pour résister aux variations de température ainsi qu'à la soudure film à film.

Ce type de produits est maintenant utilisé dans l'industrie du froid "grand-public" (réfrigérateurs et autres appareils du même type).

Le principe est adaptable à d'autres matériaux présentant une capacité d'isolation intéressante qui peuvent être plus ou moins économiques par rapport à la mousse polyuréthane à cellules ouvertes. D'autres matériaux organiques à cellules ouvertes sont décrits dans le WO 96/32605, notamment des polymères de polystyrène, polyéthylène, polyacrylique, polychlorure de vinyl.

Les films multicouches flexibles constitutifs de l'enveloppe comprennent des couches de matériaux plastiques tels que polyester, chlorure de polyvinyl, polypropylène, alcool polyvinylique.

De préférence, la couche métallique est réalisée par dépôt sous vide sur ledit film plastique. De manière alternative, le film plastique peut être stratifié sur une feuille métallique.

De préférence, la couche plastique est constituée ou est revêtue d'une couche de matériau thermoplastique scellable à chaud notamment par thermosoudage, elle est notamment constituée de polymères qui ont un point de fusion inférieur à 200°C, tels que des résines polyoléfines, notamment polyéthylène ou PVC, polyacrylonitril, polyamide.

De préférence encore, la couche métallique est revêtue sur chacune de ses faces d'une couche plastique, de préférence thermoplastique.

Des films multicouches flexibles pouvant constituer l'enveloppe sont aussi décrits dans WO 96/32605.

Lesdits complexes tubulaires isolants sous vide ainsi réalisés sont enfilés les uns contre les autres pour constituer un ensemble présentant un minimum de ponts thermiques, lesdits ponts thermiques se situant au raccordement de deux complexes tubulaires isolants. Pour cela, les complexes tubulaires isolants selon l'invention sont de la longueur la plus longue possible, par exemple 6 m, la longueur étant en général limitée par les problèmes de manutention et les risques d'endommagement lors de l'assemblage de la conduite PIP.

Dans un mode de réalisation avantageux, le complexe tubulaire selon l'invention comprend un écran supplémentaire entre ledit matériau isolant (5) et ladite paroi externe (7) de l'enveloppe, et/ou à l'extérieur de la dite enveloppe ledit écran supplémentaire étant constitué par un film réfléchissant haute performance de préférence en mylar argenté.

La présente invention a également pour objet une conduite isolée ou un ensemble de deux conduites coaxiales comprenant une conduite interne et une conduite externe (PIP), de préférence des conduites sous-marines destinées aux grandes profondeurs comprenant des complexes tubulaires unitaires selon l'invention placés autour de ladite conduite ou dans l'espace entre les deuxdites conduites coaxiales et de préférence autour de ladite conduite externe et raccordés les uns aux autres par leurs dites extrémités directement ou par l'intermédiaire d'éléments de raccordement.

Dans un mode de réalisation, lesdits complexes tubulaires unitaires sont enfilés les uns contre les autres au niveau de leurs dites extrémités qui sont ajustées, notamment élastiquement, les unes dans les autres en se chevauchant.

De préférence, on place en alternance des premiers complexes tubulaires unitaires présentant des extrémités formant un cylindre de diamètre sensiblement identique à celui du diamètre externe dudit tube de matériau isolant, et des seconds complexes tubulaires présentant des extrémités formant un cylindre de diamètre sensiblement identique à celui du diamètre interne dudit tube de matériau isolant. Ainsi, une extrémité d'undit premier complexe unitaire de grand diamètre coopère avec une extrémité d'undit deuxième complexe unitaire de plus petit diamètre.

Dans un autre mode de réalisation, lesdits complexes tubulaires unitaires présentent à leurs dites extrémités des surfaces complémentaires qui coopèrent de manière à ce que lesdites extrémités de deux complexes tubulaires unitaires s'emboîtent l'une dans l'autre.

Plus particulièrement, lesdites surfaces complémentaires ne sont pas constituées chacune d'une seule surface plane orthogonale à l'axe longitudinal (XX') des dits complexes tubulaires, mais comprennent des surfaces tridimensionnelles constituées de plusieurs surfaces planes orthogonales au dit axe longitudinal en escalier reliées entre elles par des surfaces de révolution coaxiales non orthogonales au dit axe.

Lorsque ledit complexe tubulaire isolant sous vide est positionné autour de la conduite intérieure d'un ensemble de deux conduites coaxiales, il est protégé par la conduite extérieure, cette dernière étant dimensionnée pour tenir la pression ambiante en son lieu d'installation. La pression dans l'espace annulaire entre la conduite interne et la conduite externe peut être quelconque, de préférence faible, c'est à dire par exemple la pression atmosphérique. Plus particulièrement, ladite pression ne doit pas dépasser une valeur correspondant à l'implosion du tube de matériau isolant sous vide par dépassement de la compression admissible par le matériau isolant confiné dans ledit film multicouche constituant l'enveloppe dans lequel règne un vide poussé. Dans le cadre de l'invention représente la valeur d'implosion est d'au maximum quelques bars, par exemple 3 ou 4 bars, et la pression dans l'espace entre les deuxdites conduites externe et interne en dehors de l'enveloppe est inférieure à 3 bars, de préférence identique à la pression atmosphérique.

De préférence, lesdites conduites externe et interne sont reliées entre elles par des liens mécaniques centreurs comprenant de préférence des pièces en matériau plastique, de préférence encore en élastomère, pièces contre lesquelles viennent buter les dites extrémités de certains des dits complexes tubulaires.

Une autre limitation est engendrée par le comportement différentiel de la conduite interne par rapport à la conduite externe. En effet, lorsque la conduite interne se trouve en pression, elle a tendance à s'allonger en raison de l'effet de fond. De la même manière, la variation de température de ladite conduite interne augmente la longueur. Mais la conduite externe restant à la pression du fond de la mer et à la température du milieu ambiant, en général aux alentours de 4°C, il en résulte des efforts différentiels entre les deux conduites, ce qui implique l'installation desdits liens mécaniques espacés de manière régulière ou non et situés tout le long du PIP. L'espace entre deux dits liens mécaniques est calculé de manière à éviter que la contrainte de compression engendrée au sein de la paroi de la conduite interne, due au bridage de la conduite externe l'empêchant de s'allonger, ne conduise à une instabilité mécanique de la paroi de la conduite interne appelée "flambage". Selon les cas, cet espace peut être de 6 m dans les cas défavorables ou atteindre 15 à 20 m dans les cas de conduites internes de fort diamètre, par exemple 14" à 20". L'effet de fond et le flambage étant connus de l'homme de l'art dans le domaine des conduites pétrolières, ne seront pas développés dans les détails.

Ainsi, l'intervalle compris entre deux liens mécaniques successifs sera comblé par un ou plusieurs tubes isolants sous vide ajustés sur lesdits liens mécaniques et au niveau de la jonction de chacun des tubes entre eux, de manière à limiter les ponts thermiques au droit des jonctions successives.

Avantageusement, ledit lien mécanique sera constitué d'un matériau peu conducteur de la chaleur et réalisant un bon compromis entre performances mécaniques et performances d'isolation. A titre d'exemple, un tel lien mécanique peut être réalisé par une pièce moulée de type élastomère ou de type thermoplastique ou encore à partir de résines réticulées, chargées ou non.

La présente invention a également pour objet un procédé de fabrication d'une conduite isolée ou d'un ensemble de deux conduites selon la revendication 21.

Le scellement définitif des parois internes et externes intervient après mise en vide au niveau de pression absolue souhaitée, lequel doit être le plus faible possible, par exemple de l'ordre du millibar.

Dans un mode de réalisation à l'étape 3/ ci-dessus, on réalise au moins un pli dans lesdits bords auxdites extrémités dans la direction longitudinale de la paroi externe, de préférence une pluralité de plis régulièrement et symétriquement espacés le long de la circonférence desdites extrémités dudit complexe tubulaire.

Dans un autre mode de réalisation, à l'étape 1/ on réalise au préalable des plis dans ladite paroi interne entre lesdites bords auxdites extrémités de la dite paroi interne. Les surfaces de jonction des deux demi-tubes ne sont pas des surfaces planes diamétrales par rapport au dit tube, mais constitue de préférence des surfaces à trois dimensions.

Le tube isolant ainsi obtenu est autonome et présente l'avantage de ne pas présenter de coupure longitudinale. Le système limite les pertes thermiques entre les deux parois aux pertes radiales au travers de la mousse sous vide qui sont directement liées à la valeur du coefficient de transfert thermique.

Les coupures radiales sont espacées suivant la longueur la plus grande fabriquée (soit plusieurs mètres, 12 au plus) ;

Dans un autre mode de réalisation du procédé de fabrication selon l'invention le tube de matériaux isolant est réalisé par raboutage l'une contre l'autre autour de ladite conduite, de demi-tubes préformés. Avantageusement, les surfaces de jonction des deux demi-tubes ne sont pas des surfaces planes diamétrales par rapport au dit tube, mais constitue de préférence des surfaces à trois dimensions, de manière à obtenir un cheminement le plus allongé possible et réduire les pertes thermiques.

Le système isolant obtenu est un tube complet qui peut notamment se glisser sur la canalisation à isoler au moment de sa mise en oeuvre.

Le système d'isolation selon la présente invention présente les avantages suivants :
- le système est très léger et autorise une manipulation par une seule personne ;
- le système est suffisamment souple pour accepter les tolérances de fabrication des tuyauteries sans précautions particulières et permettre ainsi son utilisation sur des tuyauteries mobiles ou dynamiques dont le rayon de courbure peut varier dans la limite des capacités de la tuyauterie elle-même ;
- le système peut s'adapter à toutes les formes que l'on rencontre sur les tuyauteries rigides comme les coudes, les tés etc... Les formes sont alors réalisées grâce au principe du surdouvage (industrie des tonneliers) ;
- bien que le système ne supporte qu'une faible variation de pression, il peut être utilisé dans des installations soumises à des pressions extérieures grâce à l'utilisation d'une enveloppe extérieure rigide ou semi-rigide qui encaissera la pression extérieure ;
- la rapidité de fabrication et d'emploi.

D'autres caractéristiques et avantages de la présente invention apparaîtront à la lumière de la description détaillée qui va suivre, en référence aux figures suivantes dans lesquelles :
- La figure 1 est une coupe axiale en vue de côté d'un PIP comportant un complexe tubulaire isolant sous vide situé entre une conduite interne et une conduite externe,
- La figure 2 est une coupe longitudinale le long d'une génératrice d'un complexe tubulaire isolant sous vide selon l'invention détaillant un mode de soudage des extrémités circulaires opposées,
- Les figures 3 et 4 sont des sections radiales de l'enveloppe d'un complexe tubulaire isolant sous vide, selon l'invention,
- Les figures 5 et 6 sont des sections longitudinales de films complexes multicouches (10) comportant un film aluminium 11 en sandwich entre des couches thermoplastiques (12),
- La figure 7 est une section en vue de côté d'un raboutage de deux bords opposés longitudinaux du film de la paroi interne selon la figure 4,
- Les figures 8 et 9 sont des sections en vue de côté d'un raboutage de deux bords longitudinaux opposés du film de la paroi externe selon, la figure 4 respectivement avant et après soudage par effet thermique,
- Les figures 10 et 11 sont des sections en vue de côté selon la figure 9 comportant de plus un écran multicouche supplémentaire, respectivement avant et après soudage par effet thermique,
- Les figures 12, 13 et 14 sont des coupes axiales en vue de côté d'une conduite interne sur laquelle est fabriquée directement l'élément d'isolation, l'ensemble étant représenté à trois stades de ladite fabrication
- Les figures 15, 16 et 17 sont des sections de l'élément isolant tubulaire reconstitués à partir de deux demi-tubes.
- Les figures 18A et 18B sont des coupes longitudinales d'un ensemble de deux conduites coaxiales PIP détaillant le raccordement de deux complexes isolants reliés directement.
- La figure 19 est une coupe longitudinale d'un PIP détaillant le raccordement de deux complexes isolants par l'intermédiaire de deux demi coquilles de complexe isolant.
- Les figures 20A et 20B sont des vues respectivement en coupe et en perspective de complexes isolants en forme de demi coquilles selon les figures 15 et 19.
- Les figures 21 et 22 détaillent un mode préféré de réalisation des diverses soudures des bords longitudinaux des parois internes (figures 21A et 21B) et des parois externes (figures 22A et 22B) longitudinales et circulaires.
- Les figures 23a à 23d détaillent un mode de réalisation des soudures des bords respectifs des parois externe et interne scellés l'un contre l'autre avec des plis dans le bord de la paroi externe.
- La figure 24 est une vue de côté détaillant la phase finale de la soudure longitudinale extérieure des figures 22A et 22B.
- La figure 25 est une vue de côté de la conduite associée à une coupe du complexe isolant dans une variante de mode d'assemblage et de soudage circulaire des bords circulaires respectifs des parois externe et interne avec des plis dans ladite paroi interne.
- La figure 26 est une section en vue de côté de l'assemblage de deux types différents de réalisation de complexe tubulaire isolant, imbriqués les uns dans les autres.

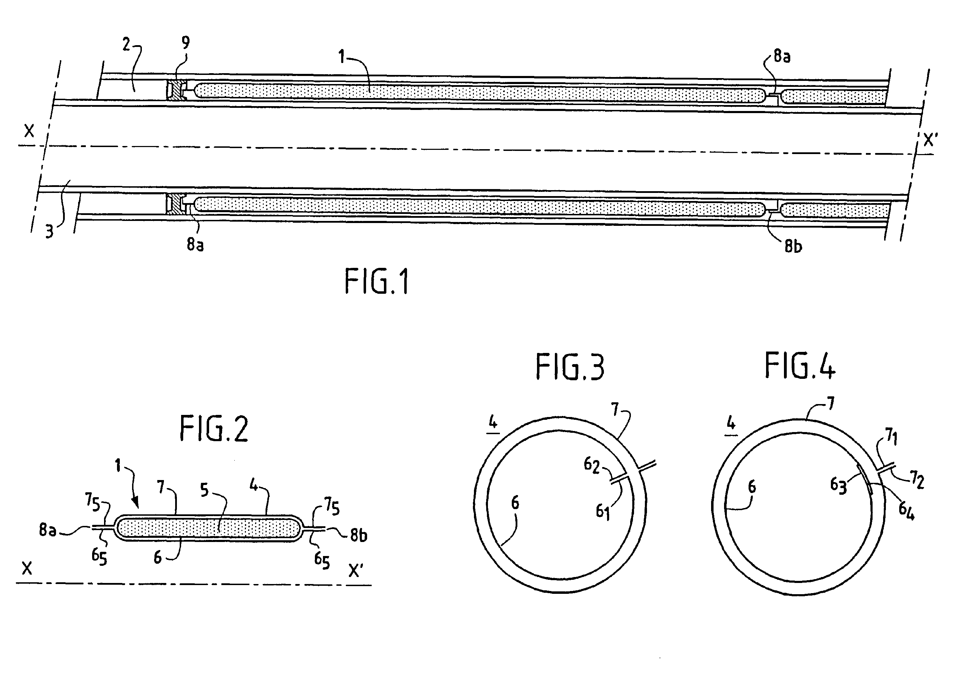

La figure 1 est une coupe axiale en vue de côté d'un PIP comportant une conduite interne 3 maintenue coaxiale à une conduite externe 2 par l'intermédiaire de liens mécaniques 9 espacées de manière régulière ou non, un complexe tubulaire isolant sous vide étant situé entre les deux conduites.

Le complexe tubulaire 1 comprend :
- une enveloppe 4 et un matériau isolant 5 confiné entre la paroi interne et la paroi externe 7 de la dite enveloppe 4,
- chacune des dites parois 6, 7 étant constituée d'un film multicouche 10 comprenant au moins une couche écran 11 jouant le rôle de barrière moléculaire contre la migration de gaz, de préférence un film métallique et au moins une couche thermoplastique 12,
- Les extrémités circulaires opposées 8a, 8b des dits complexes tubulaires étant constituées par les bords respectifs 6₅, 7₅ desdites parois interne 6 et externe 7 reliées directement l'une contre l'autre par thermoscellage, le dit matériau isolant se présentant sous forme de tube rigide continu, sans discontinuité sur sa périphérie.
- Le matériau isolant tubulaire 5 est réalisé en mousse de polyuréthane à cellules ouvertes,

Sur la figure 1, les dits complexes tubulaires unitaires 1 sont enfilés les uns dans les autres au niveau de leurs extrémités 8a, 8b qui sont ainsi ajustées élastiquement les unes dans les autres en se chevauchant ; les dites conduites externe 2 et interne 3 sont reliées entre elles par des liens mécaniques 9 comprenant des pièces en matériau élastomère, pièces contre lesquelles viennent buter les dites extrémités 8a, 8b de certains des dits complexes tubulaires 1.

Sur la figure 2, lesdites extrémités opposées 8a, 8b dans ladite direction longitudinale XX' dudit complexe tubulaire sont constitués chacune par les bords respectifs 6₅, 7₅ des faces internes à l'enveloppe de chacune desdites parois, scellés l'un contre l'autre.

Sur les figures 2 à 4, chaque paroi 6, 7 de la dite enveloppe 4 forme une surface de révolution par rapport à une axe longitudinal XX', chaque paroi étant obtenue par raboutage l'un contre l'autre, par collage ou thermosoudage, des bords longitudinaux opposés 6₁/6₂ 7₁/7₂ d'un film multicouche rectangulaire composant la dite paroi, le raboutage se faisant le long d'une génératrice de la dite surface de révolution.

Sur les figures 3, et 8 à 11, les dits deux bords longitudinaux 6₁/6₂ 7₁/7₂ des parois interne 6 et externe 7 sont raboutés vers l'extérieur de l'enveloppe l'un contre l'autre sur la même face, c'est à dire respectivement vers l'intérieur et vers l'extérieur du tube.

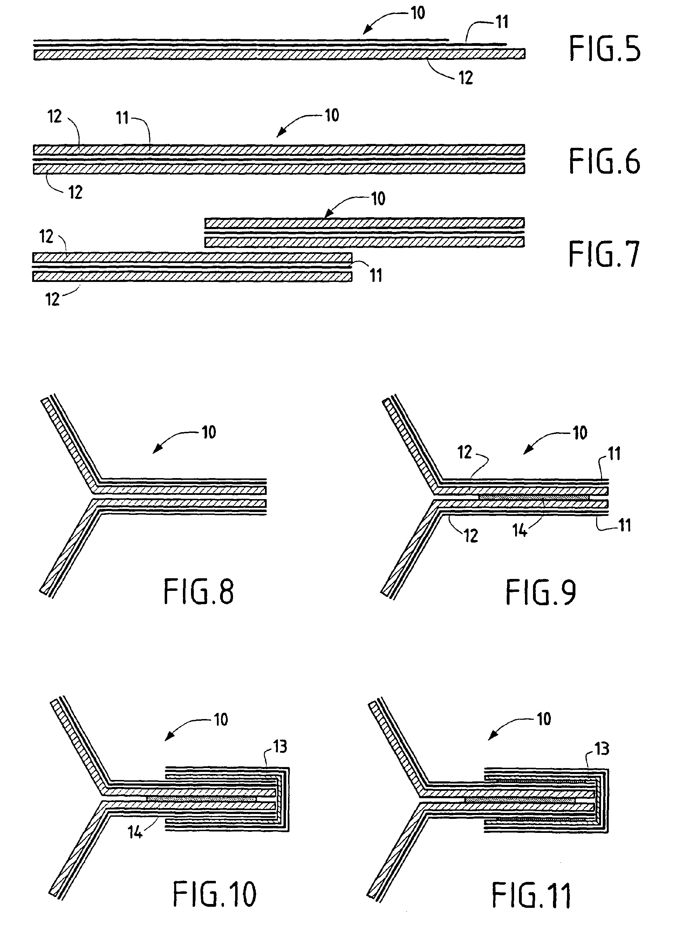

Sur les figures 4 et 7, les deux bords longitudinaux de la paroi interne 6 sont raboutés l'un contre l'autre face intérieure à l'enveloppe de l'un 6₃ contre face extérieure à l'enveloppe de l'autre 6₄.

Sur les figures 10 et 11, les dits bords longitudinaux des parois raboutés vers l'extérieur de l'enveloppe sont recouverts par un film multicouche 13 additionnel de manière à recouvrir la tranche des dits bords raboutés l'un contre l'autre, ce qui augmente l'étanchéité de l'enveloppe par augmentation du cheminement pour les molécules de gaz.

Sur les figures 9 à 11, on a représenté la couche thermoplastique fondue à chaud 14 qui permet d'obtenir le collage par thermosoudage des couches plastiques externes constitutives des films multicouches 10 de l'enveloppe flexible.

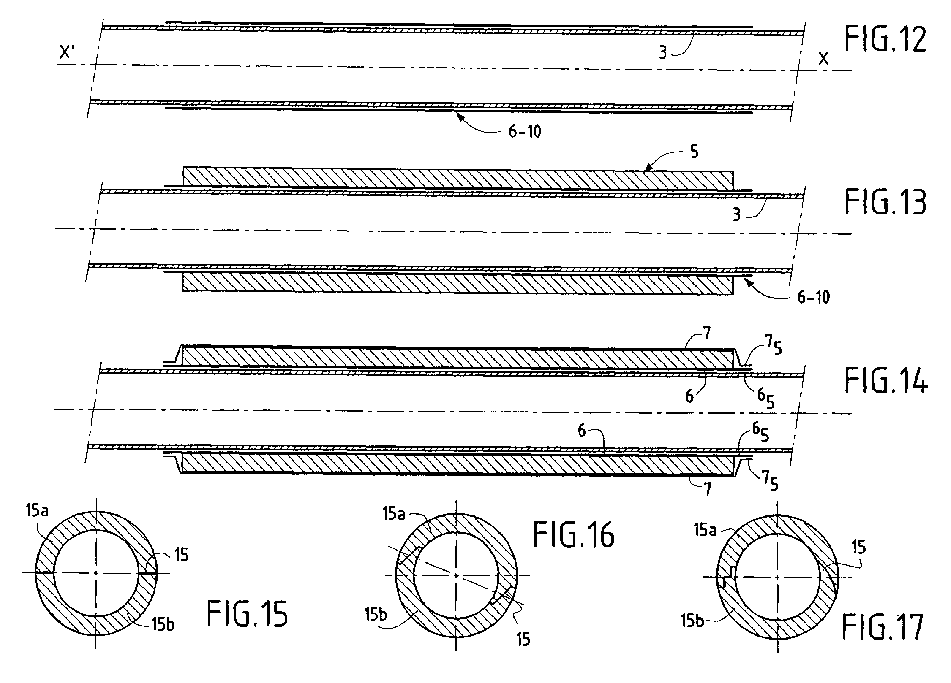

Sur les figures 12 à 14, on a représenté un mode de fabrication des complexes isolants 5 selon l'invention.

Sur la figure 12, on a représenté une première étape qui consiste à appliquer un film multicouche 10 sur la conduite interne 3 de façon à constituer ultérieurement la paroi interne 6 de ladite enveloppe 4.

Ainsi, la conduite est enveloppé directement d'un film composite soudé longitudinalement de préférence selon le principe décrit sur la

### figure 4

Sur la figure 13, on a représenté une deuxième étape qui consiste à appliquer le matériau isolant 5 constitué de mousse de polyuréthane laquelle est déposée directement sous une forme tubulaire sur le dit film multicouche 10 constitutif de la paroi interne 6.

Le matériau isolant 5 est déposé sur le film 10, par exemple par pulvérisation en synchronisation avec la rotation de la conduite intérieure, de manière à obtenir une épaisseur supérieure à l'épaisseur recherchée. Après durcissement du matériau isolant, si la face externe est irrégulière ou de diamètre trop important, ladite face est usinée par tournage ou fraisage pour atteindre la forme tubulaire recherchée.

Puis la dernière étape sur la figure 14 consiste à appliquer sur le dit matériau isolant 5 présentant une forme tubulaire un deuxième film multicouche 10 constituant la paroi externe 7 de la dite enveloppe 4.

Pour ce faire, le film de la paroi externe est alors, soit enroulé autour du matériau isolant 5 puis soudé longitudinalement comme décrit sur la figure4, soit préfabriqué pour constituer un tube de circonférence intérieure légèrement supérieure à la circonférence extérieure du tube en matériau isolant, puis glissé autour dudit ensemble conduite intérieure - matériau isolant, pour constituer la paroi externe.

Après mise sous vide on effectue le scellement des bords 6₅, 7₅ des parois externe et interne à leurs extrémités 8a, 8b pour former l'enveloppe 4.

En procédant ainsi, le jeu entre la conduite interne 3 et le complexe isolant est minimum, voire nul et le complexe isolant, construit d'une seule pièce ne présente aucune discontinuité de matière dans l'épaisseur de la paroi isolante, ce qui limite les ponts thermiques décrits ci-après.

Sur les figures 15 à 17, on a représenté un autre mode de réalisation d'un tube de matériau isolant 5. Celui-ci est réalisé à partir de deux demi-tubes 15a, 15b qui sont préformés avant d'être appliqués sur la conduite interne 3.

La figure 15 représente un système isolant préfabriqué en deux demi-coquilles 15a, 15b assemblées selon un plan diamétral. La surface jonction 15 entre les deux demi-coquilles 15a, 15b présente alors une longueur minimale entre l'extérieur et l'intérieur du tube isolant.

Sur les figures 16 et 17, on représente des surfaces de jonctions qui représentent des cheminements rallongés : les surfaces de jonctions 15 des deux demi-tubes 15a, 15b ne sont pas des surfaces planes diamètrales comprenant l'axe longitudinal XX' dudit tube, mais constituent des surfaces à trois dimensions obtenues à partir de surfaces planes en escaliers (figure 16) ou des surfaces courbes (figure 17).

La surface de jonction 15 est une zone où la conductivité thermique est accrue. C'est pourquoi, il est préférable que le cheminement entre la surface interne 16 et la surface externe 17 du tube soit le plus long possible tel que représenté sur les figures 16 et 17.

Ces plans de jonction 15 présentant un cheminement rallongé, ne suppriment pas les ponts thermiques, mais minimisent leur conséquence par allongement du parcours, donc augmente les performances du complexe isolant.

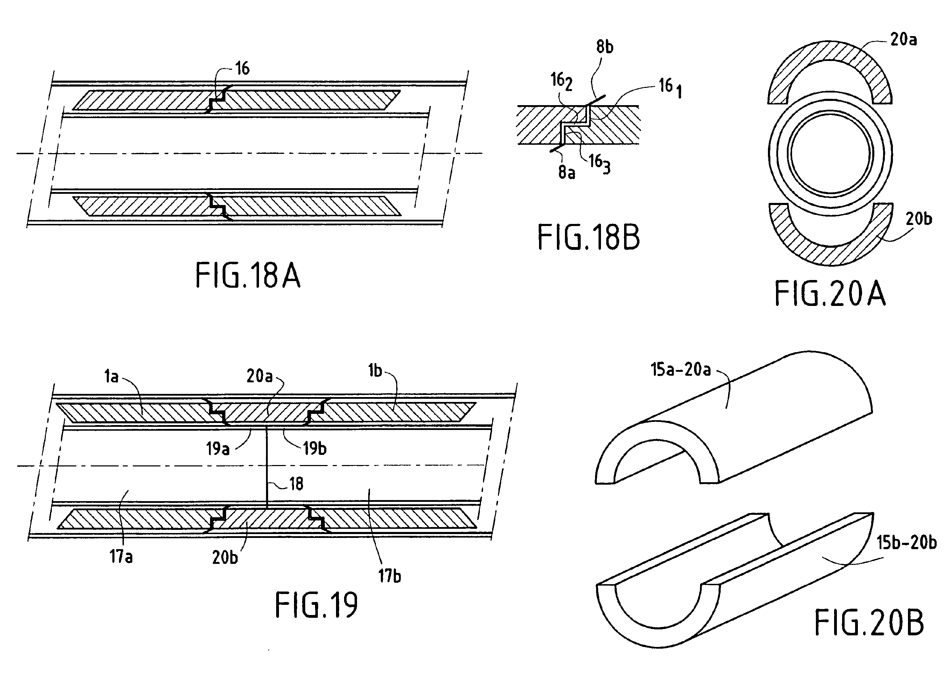

Sur la figure 18A, on a représenté le raccordement de deux complexes isolants tubulaires présentant à leurs extrémités des surfaces complémentaires 16 en escalier de manière à augmenter le cheminement de la chaleur mieux représentées sur la figure 18B. Les surfaces complémentaires 16 comprennent deux surfaces planes octogonales 16₁, 16₃ à l'axe longitudinal XX' des dites conduites, les dites surfaces planes octogonales étant reliées par une surface de révolution tubulaire 16₂ de sorte que les surfaces complémentaires peuvent s'emboîter l'une dans l'autre, les extrémités scellées des parois externes et internes des dits complexes tubulaires unitaires dépassant respectivement du côté de la conduite externe et du côté de la conduite interne.

Sur la figure 19, on a représenté un procédé de fabrication d'un ensemble de deux conduites dans lequel :
1. On assemble par soudage 18 deux sous-ensembles unitaires de conduites coaxiales 17 a et 17 b comprenant des complexes tubulaires isolant 1a et 1b qui ne recouvrent pas les extrémités 19a et 19b des dites conduites internes,
2. On complète l'isolation thermique entre les deux extrémités des complexes tubulaires 1a et 1b à l'aide d'éléments de raccordement constitués de deux demi-complexes tubulaires 20a et 20b. Chacun des deux demi-complexes tubulaires 20a et 20b comprenant un demi tube de matériau isolant préformé confiné sous vide dans une dite enveloppe composée de dit films multicouches. Les deux demi-complexes tubulaires sont raboutés l'un contre l'autre autour des dites conduites internes 3 au niveau de leurs extrémités non recouvertes 19a et 19b.

Dans la figure 19, les complexes isolants tubulaires 1a, 1b sont espacés d'une longueur pouvant atteindre par- exemple 200 mm, de préférence 400 mm, de manière à faciliter l'accès à la zone permettant d'effectuer l'assemblage des conduites internes 3, par exemple par soudage.

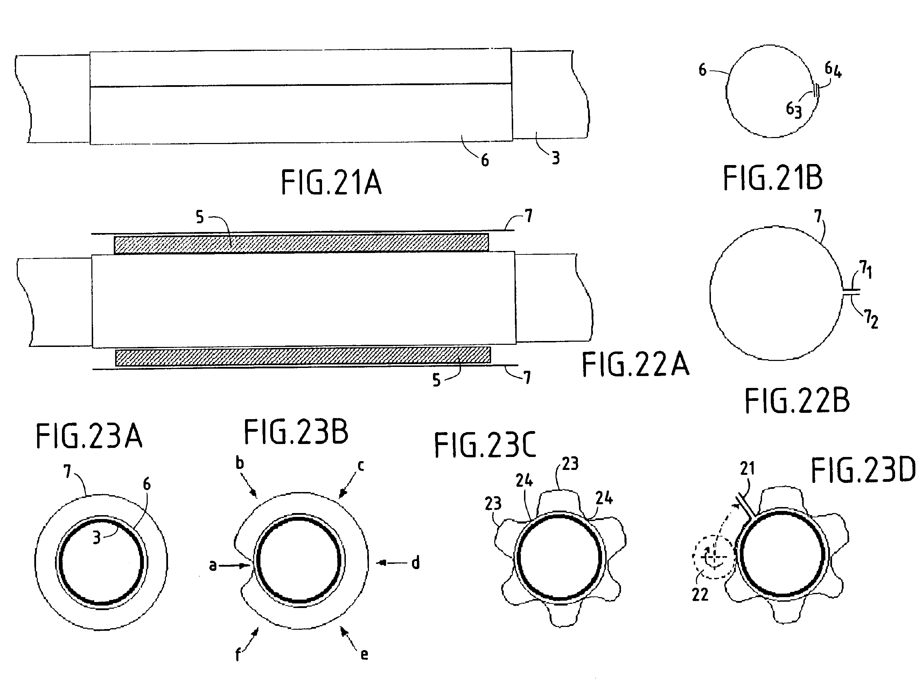

Les figures 21a et 21b représentent respectivement, en vue de côté et en coupe, la conduite interne 3 sur la quelle est installée la paroi interne 6, dont les bords opposés 6₃, 6₄ longitudinaux ont été soudés l'un sur l'autre, conformément au mode représenté sur la figure 4, puis repliée pour être insérée autour de la conduite.

Les éléments tubulaires en matériau isolant 5 sont alors installés autour de la conduite 3 comme représenté sur la figure 22a, et la paroi externe 7 de l'enveloppe est mise en place, puis ses bords opposés 7₁, 7₂ sont soudés longitudinalement comme indiqué sur la figure 22b conformément aux dispositions de la figure 4.

La réalisation de la soudure circulaire des bords respectifs 6₅, 7₅ des parois interne et externe auxdites extrémités opposées 8a, 8b desdits complexes, présente une difficulté car les deux cylindres constitués par la paroi interne et la paroi externe n'ont pas le même diamètre et par conséquent pas la même circonférence. Un mode de réalisation de la soudure selon l'invention est détaillé dans les figures 23a à 23d, dans lequel on effectue des soudages par pointage 24 de la paroi externe 7 sur la paroi interne 6 dans les six positions successives a, b, c, d, e et f tel que représenté sur la figure 23b, ce qui conduit à la configuration de la figure 23c. Dans cette configuration la paroi externe 7 de l'enveloppe possède toujours la même circonférence, mais les surplus de longueur 23 sont sensiblement uniformément répartis sur la circonférence de la paroi interne 6. La figure 23d détaille la phase finale du soudage consistant à déplacer l'élément soudant, ici représenté par un tambour chauffant 22 roulant, simplement en s'appuyant sur la paroi externe. Le tambour 22 chasse devant lui le surplus de longueur 23 jusqu'à ce que le pointage suivant soit atteint. Dans cette position, le tambour rapproche alors les deux faces internes à l'enveloppe du surplus de paroi externe et les soude directement l'une sur l'autre. En continuant le soudage circulaire, on résorbe ainsi successivement les six surlongueurs initiales 23 séparées par les six soudures par pointage 24. La soudure ainsi obtenue présente la caractéristique d'être réalisée, dans la partie circulaire, entre la paroi externe et la paroi interne de l'enveloppe et, dans la zone de résorption des surlongueurs entre la paroi externe et elle même. Lesdits bords respectifs 6₅, 7₅ desdites parois interne et externe scellés l'un contre l'autre comprennent, dans lesdits bords 7₅ de la paroi externe, une pluralité de plis 21 régulièrement et symétriquement espacés le long de la circonférence desdites extrémités 8a, 8b.

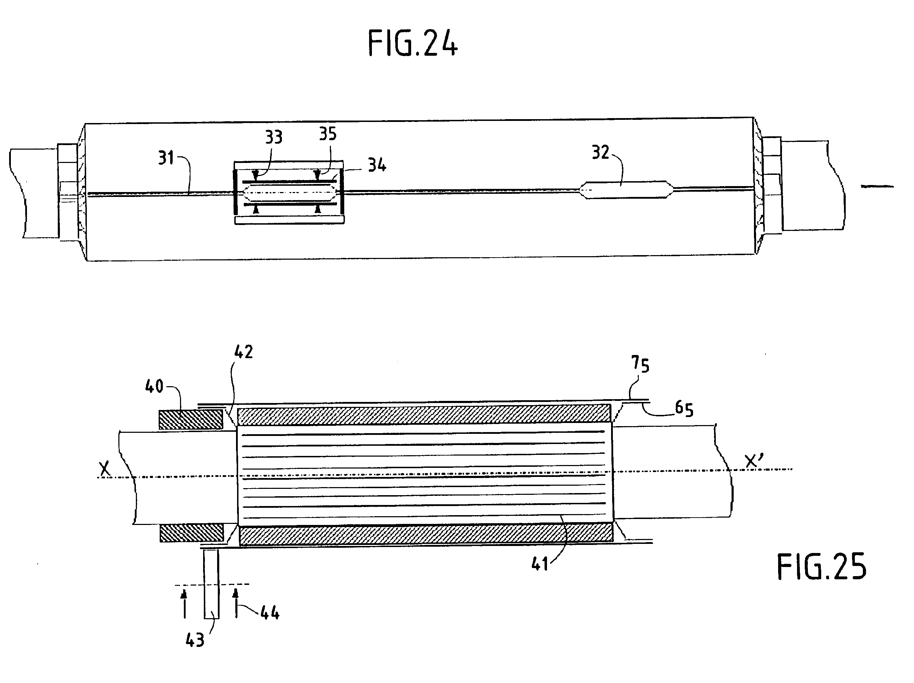

La figure 24 décrit un mode préféré de réalisation de la soudure longitudinale de la paroi externe facilitant la mise au vide du complexe tubulaire isolant. La séquence le soudage est alors :
- mise en place de la paroi interne 6 sur la conduite 3 après soudage longitudinal comme détaillé sur les figures 21a-21b.
- mise en place du matériau isolant 5 et de la paroi externe 7 de l'enveloppe comme détaillé sur les figures 22a, 22b et soudage longitudinal des bords longitudinaux opposés 7₁, 7₂ de la paroi externe de l'enveloppe selon le mode dit "pas de pèlerin". Ce mode de soudage consiste à souder dans la direction longitudinale XX' une longueur d'enveloppe 31, par exemple 75cm, puis à laisser une longueur non soudée 32, par exemple 20cm, puis de nouveau une longueur soudée et ainsi de suite. On observe alors sur la génératrice extérieure de la paroi externe de l'enveloppe une succession de zones soudées 31 et de zones ouvertes 32.
- les soudures circulaires d'extrémité 8a, 8b sont alors réalisées selon le mode décrit précédemment en référence aux figures 23a à 23d. Le complexe tubulaire isolant est ainsi complètement soudé sauf à l'emplacement des zones ouvertes 32 représentées sur la figure 24.

L'ensemble est alors installé dans la chambre à vide et un dispositif constitué d'une presse 35 équipée d'actionneurs 33, par exemple pneumatiques, à l'extrémité desquels sont installées des règles chauffantes 34, est disposé au niveau de chacune des boutonnières. Les actionneurs 33 sont représentés en position rétractée et les bords de la zone ouverte 32 sont maintenues écartés, par exemple au moyen de ruban adhésif double face qui assure le collage des bords sur les règles chauffantes 34, de préférence dans une zone légèrement décalée par rapport à la zone active de chauffage. La zone ouverte de droite sera équipée de son système de pressage avant que la chambre à vide ne soit refermée et le vide réalisé. Lorsqu'un vide suffisant est atteint, le getter, sous forme de pastilles ou de granules, est distribué de préférence dans chacune des zones ouvertes 32, puis la presse 35 est refermée grâce aux actionneurs 33 et les règles chauffantes 34 mises en température pour effectuer le scellement final. En procédant ainsi, on met en place le getter sans que ce dernier n'ait été en contact avec l'air ambiant, ce qui aurait eu pour conséquence de consommer inutilement une partie de sa capacité d'adsorption. Pour ce faire, le getter est stocké dans un réservoir sous vide ou sous gaz inerte, ce dernier n'étant mis en communication avec la chambre à vide qu'une fois le niveau de vide désiré atteint.

Ces zones ouvertes 32 constituent des sortes de "boutonnières" et présentent l'avantage considérable de pouvoir optimiser le temps de tirage au vide, car chacune des zones ouvertes 32 draine une portion de conduite située à sa droite et à sa gauche relativement restreinte, par exemple 50cm de chaque côté, alors que dans le cas d'un complexe isolant sans "boutonnières" tiré au vide depuis ses extrémités 8a, 8b, les molécules de gaz devront parcourir une distance d'au moins 3m dans le cas d'un complexe tubulaire isolant 6m. La position et la longueur des boutonnières 32 dépendra du type de matériau isolant et de la quantité de getter que l'on doit répartir sur la longueur dudit complexe tubulaire isolant. A titre d'cxemple, un complexe tubulaire isolant de 4m de longueur comporte une première boutonnière 32 de 20cm de long située à 40cm de l'extrémité, puis trois boutonnières 32 identiques de 20cm espacées de 80cm, la dernière se trouvant alors à 40cm de la seconde extrémité.

La figure 25 décrit une variante du mode d'assemblage des parois interne et externe du complexe tubulaire isolant dans laquelle la circonférence de la paroi interne est sensiblement identique, en fait très légèrement inférieure à celle de la paroi externe auxdites extrémités opposées 8a, 8b, cette circonférence correspondant sensiblement au diamètre extérieur du tube constitué par le tube de matériau isolant 5. Le bord 6₅ d'extrémité circulaire de la paroi interne du complexe tubulaire isolant possède donc un diamètre largement supérieur à celui de la conduite interne 3. On installe donc ladite paroi interne 6 soudée sur elle-même longitudinalement, autour de la conduite 3 et l'on glisse à chacune des extrémités 8a, 8b un mandrin 40 dont le diamètre correspond sensiblement au diamètre du tube de matériau isolant 5. Les bords 6₅ aux extrémités de la paroi interne 6 se trouve donc directement en contact avec les mandrins 40, sans jeu significatif entre les bords 6₅, 7₅ respectifs des parois interne et externe. On résorbe la surlongueur de la circonférence de la zone centrale de la paroi interne 6 par rapport à celle de la conduite 3 en réduisant le diamètre du tube formé par la paroi interne, en serrant uniformément toute la partie centrale de la paroi interne 6 en contact avec la conduite 3 entre lesdits bords d'extrémité 6₅ dudit tube, ce qui crée des plis 41 dans la zone centrale. Lesdits plis 41 s'estompent dans la zone conique 42 de raccordement pour se terminer sans plis dans la zone des bords 6₅ en contact avec les mandrins. Les éléments isolants 5 sont alors mis en place et la paroi externe 7 est installée puis soudée en "pas de pèlerin" comme décrit ci-dessus. Les soudures aux extrémités 8a, 8b sont alors réalisées à l'aide d'un dispositif constitué par exemple d'un tambour chauffant 43 roulant simplement sur la périphérie de la paroi externe 7 de l'enveloppe et appuyant 44 de manière contrôlée sur cette dernière.

Le dispositif de soudage peut être du type chauffant, à ultrason ou à induction, ce peut être un tambour ou un patin frottant simplement sur la paroi externe à souder. Le soudage peut être remplacé par un collage, par un adhésif double face ou par une combinaison de ces procédés.

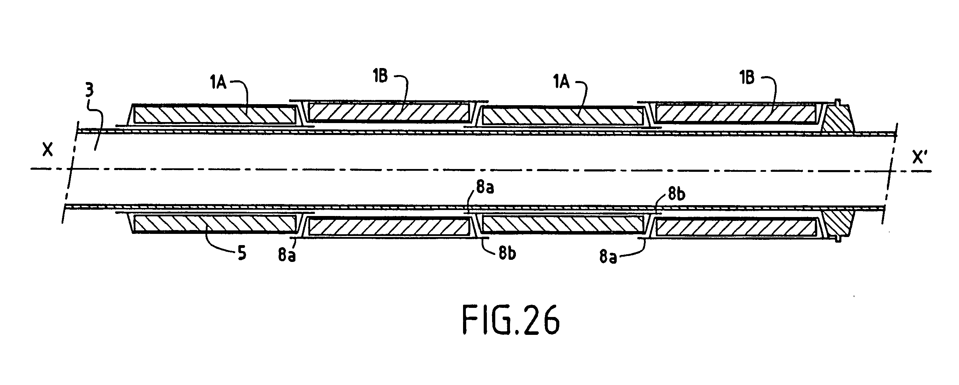

La figure 26 décrit une manière avantageuse de réaliser l'isolation d'une conduite de grande longueur en combinant les deux types de fabrication décrits précédemment. Par exemple, on installe sur la conduite 3 un premier complexe isolant 1A réalisé selon le mode décrit dans les figures 14, 21-22-23. Puis, on lui juxtapose un complexe isolant 1 B réalisé selon le mode décrit dans la figure 25, ce qui permet de rapprocher au plus près les deux complexes tubulaires isolants de type A et B et de réduire ainsi les ponts thermiques. L'alternance A-B-A-B-... sera maintenue jusqu'à ce qu'un lien mécanique 9 tel que détaillé dans la figure 1 soit nécessaire pour maintenir l'écartement entre la conduite interne et externe. Pour la clarté du dessin, et pour comprendre l'imbrication des extrémités circulaires 8a, 8b des complexes tubulaires isolants, ceux de type B ont été représentés avec un diamètre supérieur. Mais, en fait les premiers complexes tubulaires 1A présentent des extrémités 8a, 8b formant un cylindre de diamètre sensiblement identique à celui du diamètre interne dudit tube du matériau isolant 5 et les seconds complexes tubulaires 1B présentent des extrémités 8a, 8b formant un cylindre de diamètre sensiblement identique à celui du diamètre externe dudit tube de matériau isolant 5.

Le complexe tubulaire isolant restant un produit fragile, il est avantageusement protégé par une enveloppe de protection extérieure (non représentée), mécaniquement résistante. Cette enveloppe de protection peut être un simple enrubannage d'un film mince résistant, ou elle peut être constituée par l'application d'un matériau composite, par exemple à base de résine époxy ou polyuréthanne, qui polymérise soit sous l'effet de la chaleur ambiante ou de rayonnements ultra-violets. Dans le cas d'une conduite simple, cette enveloppe de protection jouera le rôle de coquille extérieure. Dans le cas de PIP, cette enveloppe de protection évitera avantageusement l'endommagement du complexe tubulaire isolant lors de l'installation de l'enveloppe externe par glissement sur ledit complexe tubulaire isolant.

Ce type d'isolation haute performance vise tout type de conduite de 50,8 mm a 762 mm (2" (pouces) à 30" (pouces)) de diamètre, et plus particulièrement les conduites sous-marines de production de 152 mm à 356mm (6" (pouces) à 14" (pouces)). L'épaisseur d'isolation permettant d'atteindre les niveaux de performances recherchées sont de l'ordre de 5 mm à 2 cm d'épaisseur pour un matériau isolant constitué de la mousse de polyméthane à cellules ouvertes. Dans certaines applications où l'on recherche une isolation extrême, une épaisseur jusqu'à 5 cm est envisageable.

## Revendications

1. Complexe tubulaire isolant (1) apte à être placé autour d'une conduite (3) comprenant
- une enveloppe flexible (4) et un matériau isolant (5) confiné sous vide entre la paroi interne (6) et la paroi externe (7) de la dite enveloppe (4),
- chacune des dites parois (6, 7) étant constituée d'un film multicouche (10) comprenant au moins une couche écran (11), constitué d'un film métallique, et au moins une couche plastique (12),
- ledit matériau isolant (5) se présentant sous forme de tube (15a, 15b), et
- les extrémités opposées (8a, 8b) dans la direction longitudinale (XX') du dit complexe tubulaire étant constituées chacune par les bords respectifs (6₅, 7₅) des faces internes à l'enveloppe desdites parois interne et externe dudit complexe tubulaire, scellés l'un contre l'autre, par collage ou thermosoudage,
**caractérisé en ce que** lesdites extrémités opposées forment des plis dans lesdites parois externe
ou interne, de telle sorte que lesdites extrémités opposées (8a, 8b) forment un cylindre de diamètre sensiblement identique au diamètre interne ou respectivement externe dudit tube de matériau isolant.

2. Complexe tubulaire isolant selon la revendication 1 **caractérisé en ce que** chaque paroi (6, 7) de la dite enveloppe (4) forme une surface de révolution par rapport à un axe longitudinal (XX'), chaque paroi étant obtenue par scellage l'un contre l'autre, par collage ou thermosoudage, des bords longitudinaux opposés (6₁/6₂, 7₁/7₂) d'un film multicouche rectangulaire composant une même dite paroi, le raboutage se faisant le long d'une génératrice de la dite surface de révolution.

3. Complexe tubulaire isolant selon la revendication 1 ou 2 **caractérisées en ce que** les dits deux bords longitudinaux (6₁/6₂, 7₁/7₂) de la paroi (6, 7) sont scellés l'un contre l'autre sur la même face vers l'extérieur de l'enveloppe.

4. Complexe tubulaire isolant selon l'une des revendications 1 à 3, **caractérisé en ce que** lesdits bords respectifs (6₅, 7₅) desdites parois interne et externe scellés l'un contre l'autre forment un cylindre de diamètre sensiblement identique à celui du diamètre interne dudit tube de matériau isolant (5), et lesdits bords (7₅) de la paroi externe, comprennent au moins un pli, de telle sorte qu'une partie desdits bords (7₅) de la paroi externe sont repliés et scellés sur eux-mêmes.

5. Complexe tubulaire isolant selon la revendication 4, **caractérisé en ce que** lesdits bords de la paroi externe comprennent une pluralité de dits plis régulièrement et symétriquement espacés le long de la circonférence desdites extrémités (8a, 8b).

6. Complexe tubulaire selon l'une des revendications 1 à 3, **caractérisé en ce que** lesdits bords respectifs (6₅, 7₅) desdites parois interne et externe, scellés l'un contre l'autre forment un cylindre de diamètre sensiblement identique à celui du diamètre externe dudit tube de matériau isolant (5), et ladite paroi interne de l'enveloppe comprend des plis (41) dans la zone centrale en contact avec ladite conduite (3) entre lesdites extrémités (8a, 8b).

7. Complexe tubulaire isolant de conduite coaxiale selon l'une des revendications 1 à 6, **caractérisé en ce que** les dits bords longitudinaux opposés d'une même paroi (6₁/6₂, 7₁/7₂) scellés l'un contre l'autre vers l'extérieur de l'enveloppe sont recouverts par un film multicouche additionnel (13) de manière à recouvrir la tranche des dits bords longitudinaux.

8. Complexe tubulaire isolant selon l'une des revendications 1 à 7 **caractérisé en ce que** la pression à l'intérieur de la dite enveloppe est inférieure à 5x10² Pa (5 mbars) de préférence inférieure à 10² Pa (1 mbar).

9. Complexe tubulaire selon l'une des revendications 1 à 8 **caractérisé en ce que** le matériau isolant (5) à l'intérieur de la dite enveloppe (4) est une mousse de matériau synthétique micro-poreux.

10. Complexe tubulaire isolant selon l'une des revendications 1 à 9 **caractérisé en ce que** la mousse dudit matériau synthétique micro-poreux est une mousse de polyuréthane à cellules ouvertes.

11. Complexe tubulaire selon l'une des revendications 1 à 10 **caractérisé en ce que** ledit tube de matériau isolant est constitué par des arc de tubes assemblés (15a, 15b), de préférence des demi-tubes, raboutés l'un contre l'autre.

12. Conduite, de préférence conduite sous-marine isolée **caractérisée en ce qu'**elle comprend des complexes tubulaires isolants (1) selon l'une des revendications 1 à 11 placés autour d'une conduite et raccordés les uns aux autres au niveau de leurs dites extrémités (8a, 8b), directement ou par l'intermédiaire d'éléments de raccordement (20a, 20b).

13. Conduite isolée selon la revendication 12 **caractérisée en ce que** les dits complexes tubulaires isolants (1) sont enfilés les uns contre les autres au niveau de leurs dites extrémités (8a, 8b) qui sont ajustées élastiquement les unes dans les autres en se chevauchant.

14. Conduite isolée selon la revendication 13, **caractérisée en ce qu'**on juxtapose des premiers complexes tubulaires isolants (1A) présentant des extrémités (8a, 8b) formant un cylindre de diamètre sensiblement identique à celui du diamètre interne dudit tube de matériau isolant (5), et des seconds complexes tubulaires (1B) présentant des extrémités (8a, 8b) formant un cylindre de diamètre sensiblement identique à celui du diamètre externe dudit tube de matériau isolant (5).

15. Conduite isolée selon l'une des revendications 12 à 14 **caractérisée en ce que** lesdits complexes tubulaires isolants (1) présentent à leurs dites extrémités (8a, 8b) des surfaces complémentaires (16) qui coopèrent de manière à ce que lesdites extrémités de deux complexes tubulaires unitaires s'emboîtent l'une dans l'autre.

16. Conduites isolée selon la revendication 15 **caractérisée en ce que** lesdites surfaces complémentaires (16) comprennent des surfaces tridimensionnelles constituées de plusieurs surfaces planes (16₁, 16₃) orthogonales au dit axe longitudinal (XX') en escalier reliées entre elles par des surfaces de révolution coaxiales non orthogonales (16₂) au dit axe.

17. Ensemble de deux conduites coaxiales comprenant une conduite interne (3) et une conduite externe (2) comprenant des complexes tubulaires unitaires (1) selon l'une des revendications 1 à 12, placés dans l'espace entre les deuxdites conduites et raccordés les uns aux autres au niveau de leurs dites extrémités (8a, 8b), ladite conduite interne, et/ou ladite conduite externe, comprenant une dite conduite isolée selon l'une des revendications 12 à 16.

18. Ensemble de deux conduites coaxiales selon la revendication 17, **caractérisé en ce que** les dites conduites externe (2) et interne (3) sont reliées entre elles par des liens mécaniques centreurs (9), pièces contre lesquelles viennent buter les dites extrémités (8a, 8b) de certains des dits complexes tubulaires (1).

19. Ensemble de 2 conduites selon la revendication 17 ou 18, **caractérisé en ce que** la pression dans l'espace entre les deuxdites conduites, en dehors de l'enveloppe, est inférieure à 3.10⁵ Pa (3 bars).

20. Ensemble de deux conduites selon la revendication 17, **caractérisé en ce que** ladite conduite externe comprend une dite conduite isolée selon l'une des revendications 13 à 16.

21. Procédé de fabrication d'une conduite isolée ou d'un ensemble de deux conduites coaxiales selon l'une des revendications **13 à 20 caractérisé en ce qu'**il comprend les étapes dans lesquelles :
1/ on applique le dit matériau isolant (5) sur un premier film multicouche (10) constitutif de ladite paroi interne (6) revêtu sur unedite conduite, de manière à ce que le dit matériau isolant (5) présente une forme tubulaire, puis
2/ on recouvre le dit matériau isolant (5) avec un deuxième film multicouche (10) constitutif de ladite paroi externe (7) de l'enveloppe (4), puis
3/ on réalise lesdites extrémités opposées (8a, 8b) dudit complexe en scellant lesdits bords respectifs (6₅, 7₅) desdites parois externe et interne, et en formant des plis dans lesdites parois externe ou interne, de telle sorte que lesdites extrémités opposées (Sa, 8b) forment un cylindre de diamètre sensiblement identique au diamètre interne ou respectivement externe dudit tube de matériau isolant.

22. Procédé de fabrication selon la revendication 21, **caractérisé en ce qu'**à l'étape 1/ un tube de matériau isolant (5) est réalisé par raboutage l'un contre l'autre autour de la conduite (3) interne, de deux demi-tubes préformés (15a, 15b).

23. Procédé selon la revendication 21 ou 22, **caractérisé en ce qu'**à l'étape 3/, on réalise un pli (21) ou une pluralité de plis régulièrement et symétriquement espacés le long desdits bords (7₅) aux dites extrémités (8a, 8b) dudit complexe tubulaire.

24. Procédé selon la revendication 21 ou 22, **caractérisé en ce que** à l'étape 1/ on réalise au préalable des plis (41) dans ladite paroi interne (6) entre lesdites bords (6₅) auxdites extrémités (8a, 8b) de la dite paroi interne (6).

## Claims

1. An insulating tubular complex (1) suitable for placing around a pipe (3) and comprising:
- a flexible envelope (4) of an insulating material (5) confined in a vacuum between an inner wall (6) and the outer wall (7) of said envelope (4);
- each of said walls (6, 7) being constituted by a multilayer film (10) including at least one screen layer (11), constituted by a metal film, and at least one plastics layer (12);
- said insulating material (5) being in the form of a tube (15a, 15b); and
- each of the opposite ends (8a, 8b) in the longitudinal direction (XX') of said tubular complexes being constituted by the respective margins (6₅, 7₅) of the faces of said inner and outer walls that are inside the envelope, being sealed one against the other, by adhesive or heat sealing, the complex being **characterised in that** said opposite ends form folds in said outer and inner walls, such that said opposite ends (8a, 8b) form cylinders of diameter substantially identical to the inner or respectively outer diameter of said tube of insulating material.

2. An insulating tubular complex according to claim 1, **characterised in that** each wall (6, 7) of said envelope (4) forms a surface of revolution about a longitudinal axis (XX'), each wall being obtained from a rectangular multilayer film constituting said wall having two opposite longitudinal margins (6₁/6₂, 7₁/7₂) sealed one against the other, by adhesive or heat sealing, with the join taking place along a generator line of said surface of revolution.

3. An insulating tubular complex according to claim 1 or 2, **characterised in that** said two longitudinal margins (6₁/6₂, 7₁/7₂) of the wall (6, 7) are sealed one against the other via the same face towards the outside of the envelope.

4. An insulating tubular complex according to one of claims 1 to 3, **characterised in that** said respective margins (6₅, 7₅) of said inner and outer walls that are sealed one against the other form a cylinder of diameter that is substantially identical to the inner diameter of said tube of insulating material (5), and said margins (7₅) of the outer wall, comprise at least one fold, such that portions of said margins (7₅) of the outer wall are folded and sealed onto themselves.

5. An insulating tubular complex according to claim 4, **characterised in that** said margins of said outer wall comprise a plurality of said folds that are regularly and symmetrically spaced apart along the circumference of each of said ends (8a, 8b).

6. A tubular complex according to one of claims 1 to 3, **characterised in that** said respective margins (6₅, 7₅) of said inner and outer walls that are sealed one against the other form a cylinder of diameter that is substantially identical to the outside diameter of said tube of insulating material (5), and said inner wall of the envelope has folds (41) in its central zone in contact with said pipe (3) between said ends (8a, 8b).

7. An insulating tubular complex for a coaxial pipe according to one of claims 1 to 6, **characterised in that** said opposite longitudinal margins of a given wall (6₁/6₂, 7₁/7₂) that are sealed one against the other towards the outside of the envelope are themselves covered in an additional multilayer film (13) so as to cover the edges of said longitudinal margins.

8. An insulating tubular complex according to one of claims 1 to 7, **characterised in that** the pressure inside said envelope is less than 5.10² Pa (5 mbars), and preferably less than 10² Pa (1 mbar).

9. A tubular complex according to one of claims 1 to 8, **characterised in that** the insulating material (5) inside said envelope (4) is a foam of microporous synthetic material.

10. An insulating tubular complex according to one of claims 1 to 9, **characterised in that** the foam of said microporous synthetic material is an open-cell polyurethane foam.

11. A tubular complex according to one of claims 1 to 10, **characterised in that** said tube of insulating material is constituted by assembled-together tubular arcs (15a, 15b), preferably half-tubes that are joined one against the other.

12. A pipe, preferably an insulated underwater pipe, **characterised in that** it comprises insulating tubular complexes (1) according to one of claims 1 to 11 placed around a pipe and connected one to another via their said ends (8a, 8b), either directly or via coupling elements (20a, 20b).

13. An insulated pipe according to claim 12, **characterised in that** said insulating tubular complexes (1) are engaged one against another at their said ends (8a, 8b) which are fitted elastically one into another with overlap.

14. An insulated pipe according to claim 13, **characterised in that** first insulating tubular complexes (1A) having ends (8a, 8b) forming cylinders of diameter substantially identical to the inside diameter of said tube of insulating material (5) are juxtaposed with second tubular complexes (1B) presenting ends (8a, 8b) forming cylinders of diameter substantially identical to the outside diameter of said tube of insulating material (5).

15. An insulated pipe according to one of claims 12 to 14, **characterised in that** said insulating tubular complexes (1) present complementary surfaces (16₁) at their said ends (8a, 8b) which cooperate in such a manner that said ends of two individual tubular complexes engage one in the other.

16. An insulated pipe according to claim 15, **characterised in that** said complementary surfaces (16) comprise three-dimensional surfaces in a staircase configuration constituted by a plurality of plane surfaces (16₁, 16₃) orthogonal to said longitudinal axis (XX') and interconnected by surfaces of revolution (16₂) that are coaxial with and not orthogonal to said axis.

17. A set of two coaxial pipes comprising an inner pipe (3) and an outer pipe (2) with individual tubular complexes (1) according to one of claims 1 to 12, placed in the gap between said two pipes and connected to one another via their said ends (8a, 8b), said inner pipe, and/or said outer pipe, comprising a said insulated pipe according to one of claims 12 to 16.

18. A set of two coaxial pipes according to claim 17, **characterised in that** said outer and inner pipes (2, 3) are interconnected by mechanical centring links (9) against which pieces said ends (8a, 8b) of some of said tubular complexes (1) come into abutment.

19. A set of two pipes according to claim 17 or claim 18, **characterised in that** the pressure in the space between said two pipes, outside the envelope, is less than 3.10⁵ Pa (3 bars).

20. A set of two pipes according to claim 17, **characterised in that** said outer pipe comprises a said insulated pipe according to one of claims 13 to 16.

21. A method of making an insulated pipe or a set of two coaxial pipes according to one of claims 13 to 20, **characterised in that** it comprises the following steps:
1/ said insulating material (5) is applied to a first multilayer film (10) constituting said inner wall (6) covering one of said pipes, so that said insulating material (5) is tubular in shape; then
2/ said insulating material (5) is covered in a second multilayer film (10) constituting said outer wall (7) of the envelope (4); and then
3/ said opposite ends (8a, 8b) of said complex are made by sealing together said respective margins (6₅, 7₅) of said outer and inner walls, and by forming folds in said inner and outer walls such that said opposite ends (8a, 8b) form cylinders of diameter substantially identical to the inside or respectively outside diameter of said tube of insulating material.

22. A method of making according to claim 21, **characterised in that** in step 1/ a tube of insulating material (5) is made by joining two preformed half-tubes (15a, 15b) one against the other around the inner pipe (3).

23. A method according to claim 21 or 22, **characterised in that** in step 3/, one fold (21) or a plurality of folds are made regularly and symmetrically spaced apart along said margins (7₅) at said ends (8a, 8b) of said tubular complex.

24. A method according to claim 21 or 22, **characterised in that** in step 1/, folds (41) are previously made in said inner wall (6) between said margins (6₅) at said ends (8a, 8b) of said inner wall (6).

## Patentansprüche

1. Rohrförmiger Isolierkomplex (1), der geeignet ist, um eine Leitung (3) herum angeordnet zu werden und folgendes umfaßt:
- eine flexible Hülle (4) und ein Isoliermaterial (5), das unter Vakuum zwischen der Innenwand (6) und der Außenwand (7) der Hülle (4) eingeschlossen ist,
- wobei eine jede der Wände (6, 7) von einem Mehrlagenfilm (10) gebildet ist, der wenigstens eine von einem Metallfilm gebildete Abschirmschicht (11) und wenigstens eine Kunststoffschicht (12) umfaßt,
- wobei das Isoliermaterial (5) in Form eines Rohrs (15a, 15b) vorliegt, und
- wobei die gegenüberliegenden Enden (8a, 8b) in Längsrichtung (XX') des rohrförmigen Komplexes jeweils von den jeweiligen Kanten (6₅, 7₅) der Flächen innerhalb der Hülle der Innen- und der Außenwand des rohrförmigen Komplexes gebildet sind, die durch Kleben oder Heißsiegeln miteinander versiegelt sind, **dadurch gekennzeichnet, daß** die gegenüberliegenden Enden Falten in der Außen- oder Innenwand bilden, so daß die gegenüberliegenden Enden (8a, 8b) einen Zylinder bilden, dessen Durchmesser mit dem Innen- bzw. Außendurchmesser des Rohrs aus Isoliermaterial im wesentlichen identisch ist.

2. Rohrförmiger Isolierkomplex nach Anspruch 1, **dadurch gekennzeichnet, daß** jede Wand (6, 7) der Hülle (4) eine Rotationsfläche gegenüber einer Längsachse (XX') bildet, wobei jede Wand **dadurch** erhalten wird, daß die gegenüberliegenden Längskanten (6₁/6₂, 7₁/7₂) eines rechteckigen Mehrlagenfilms, der eine gleiche genannte Wand bildet, durch Kleben oder Heißsiegeln miteinander versiegelt werden, wobei das Aneinanderfügen entlang einer Mantellinie der Rotationsfläche erfolgt.

3. Rohrförmiger Isolierkomplex nach Anspruch 1 oder 2, **dadurch gekennzeichnet, daß** die zwei Längskanten (6₁/6₂, 7₁/7₂) der Wand (6, 7) an der gleichen Seite zur Außenseite der Hülle miteinander versiegelt sind.

4. Rohrförmiger Isolierkomplex nach einem der Ansprüche 1 bis 3, **dadurch gekennzeichnet, daß** die miteinander versiegelten jeweiligen Kanten (6₅, 7₅) der Innen- und Außenwand einen Zylinder bilden, dessen Durchmesser mit dem Innendurchmesser des Rohrs aus Isoliermaterial (5) im wesentlichen identisch ist, und die Kanten (7₅) der Außenwand wenigstens eine Falte aufweisen, so daß ein Teil der Kanten (7₅) der Außenwand umgebogen und mit sich selbst versiegelt sind.

5. Rohrförmiger Isolierkomplex nach Anspruch 4, **dadurch gekennzeichnet, daß** die Kanten der Außenwand eine Vielzahl von Falten aufweisen, die entlang des Umfangs der Enden (8a, 8b) gleichmäßig und symmetrisch beabstandet sind.

6. Rohrförmiger Komplex nach einem der Ansprüche 1 bis 3, **dadurch gekennzeichnet, daß** die jeweiligen miteinander versiegelten Kanten (6₅, 7₅) der Innen- und Außenwand einen Zylinder bilden, dessen Durchmesser mit dem Außendurchmesser des Rohrs aus Isoliermaterial (5) im wesentlichen identisch ist, und die Innenwand der Hülle in dem mit der Leitung (3) in Kontakt befindlichen mittleren Bereich, zwischen den Enden (8a, 8b) Falten (41) aufweist.

7. Rohrförmiger Isolierkomplex für eine Koaxialleitung nach einem der Ansprüche 1 bis 6, **dadurch gekennzeichnet, daß** die gegenüberliegenden Längskanten einer gleichen Wand (6₁/6₂, 7₁/7₂), die zur Außenseite der Hülle miteinander versiegelt sind, mit einem zusätzlichen Mehrlagenfilm (13) derart überzogen sind, daß der Rand der Längskanten bedeckt ist.

8. Rohrförmiger Isolierkomplex nach einem der Ansprüche 1 bis 7, **dadurch gekennzeichnet, daß** der Druck innerhalb der Hülle unter 5x10² Pa (5 mbar), vorzugsweise unter 10² Pa (1 mbar) liegt.

9. Rohrförmiger Komplex nach einen der Ansprüche 1 bis 8, **dadurch gekennzeichnet, daß** das Isoliermaterial (5) innerhalb der Hülle (4) ein Schaum aus mikroporösem Kunststoffmaterial ist.

10. Rohrförmiger Isolierkomplex nach einem der Ansprüche 1 bis 9, **dadurch gekennzeichnet, daß** der Schaum aus dem mikroporösen Kunststoffmaterial ein offenzelliger Polyurethanschaum ist.

11. Rohrförmiger Komplex nach einem der Ansprüche 1 bis 10, **dadurch gekennzeichnet, daß** das Rohr aus Isoliermaterial aus verbundenen Rohrbögen (15a, 15b), vorzugsweise Halbrohren besteht, die aneinander gefügt sind.

12. Leitung, vorzugsweise isolierte Unterwasserleitung, **dadurch gekennzeichnet, daß** sie rohrförmige Isolierkomplexe (1) nach einem der Ansprüche 1 bis 11 umfaßt, die um eine Leitung herum angeordnet und im Bereich ihrer Enden (8a, 8b) direkt oder mit Hilfe von Verbindungselementen (20a, 20b) miteinander verbunden sind.

13. Isolierte Leitung nach Anspruch 12, **dadurch gekennzeichnet, daß** die rohrförmigen Isolierkomplexe (1) im Bereich ihrer Enden (8a, 8b), die sich überlappend elastisch ineinander gepaßt sind, aneinander gereiht sind.

14. Isolierte Leitung nach Anspruch 13, **dadurch gekennzeichnet, daß** erste rohrförmige Isolierkomplexe (1A), die Enden (8a, 8b) aufweisen, welche einen Zylinder bilden, dessen Durchmesser mit dem Innendurchmesser des Rohrs aus Isoliermaterial (5) im wesentlichen identisch ist, sowie zweite rohrförmige Komplexe (1 B), die Enden (8a, 8b) aufweisen, welche einen Zylinder bilden, dessen Durchmesser mit dem Außendurchmesser des Rohrs aus Isoliermaterial (5) im wesentlichen identisch ist, aneinander gesetzt werden.

15. Isolierte Leitung nach einem der Ansprüche 12 bis 14, **dadurch gekennzeichnet, daß** die rohrförmigen Isolierkomplexe (1) an ihren Enden (8a, 8b) ergänzende Flächen (16) aufweisen, die derart zusammenwirken, daß die Enden von zwei rohrförmigen Einzelkomplexen ineinandergreifen.

16. Isolierte Leitung nach Anspruch 15, **dadurch gekennzeichnet, daß** die ergänzenden Flächen (16) dreidimensionale Flächen aufweisen, die von mehreren stufenförmigen, zur Längsachse (XX') orthogonalen ebenen Flächen (16₁, 16₃), die durch koaxiale, zu der genannten Achse nicht orthogonale Rotationsflächen (16₂) verbunden sind, gebildet sind.

17. Anordnung aus zwei Koaxialleitungen, mit einer Innenleitung (3) und einer Außenleitung (2), die rohrförmige Einzelkomplexe (1) nach einem der Ansprüche 1 bis 12 umfassen, die in dem Raum zwischen den zwei Leitungen angeordnet und im Bereich ihrer Enden (8a, 8b) aneinander gefügt sind, wobei die Innenleitung, und/oder die Außenleitung, eine isolierte Leitung nach einem der Ansprüche 12 bis 16 umfaßt bzw. umfassen.

18. Anordnung aus zwei Koaxialleitungen nach Anspruch 17, **dadurch gekennzeichnet, daß** die Außenleitung (2) und die Innenleitung (3) durch mechanische Zentrierverbindungsteile (9) untereinander verbunden sind, Teile, an denen die Enden (8a, 8b) einiger der rohrförmigen Komplexe (1) anschlagen.

19. Anordnung aus 2 Koaxialleitungen nach Anspruch 17 oder 18, **dadurch gekennzeichnet, daß** der Druck in dem Raum zwischen den zwei Leitungen, außerhalb der Hülle, unter 3.10⁵ Pa (3 bar) liegt.

20. Anordnung aus zwei Leitungen nach Anspruch 17, **dadurch gekennzeichnet, daß** die Außenleitung eine isolierte Leitung nach einem der Ansprüche 13 bis 16 umfaßt.

21. Verfahren zum Herstellen einer isolierten Leitung oder einer Anordnung aus zwei Koaxialleitungen nach einem der Ansprüche 13 bis 20, **dadurch gekennzeichnet, daß** es die folgenden Schritte umfaßt, bei denen:
1/ das Isoliermaterial (5) auf einen auf eine Leitung aufgezogenen, die Innenwand (6) bildenden ersten Mehrlagenfilm (10) aufgebracht wird, so daß das Isoliermaterial (5) eine Rohrform aufweist, dann
2/ das Isoliermaterial (5) mit einem die Außenwand (7) der Hülle (4) bildenden zweiten Mehrlagenfilm (10) überzogen wird, anschließend
3/ die gegenüberliegenden Enden (8a, 8b) des Komplexes durch Versiegeln der jeweiligen Kanten (6₅, 7₅) der Außen- und der Innenwand sowie durch Bilden von Falten in der Außen- oder Innenwand ausgebildet werden, so daß die gegenüberliegenden Enden (8a, 8b) einen Zylinder bilden, dessen Durchmesser mit dem Innendurchmesser bzw. Außendurchmesser des Rohrs aus Isoliermaterial im wesentlichen identisch ist.

22. Herstellungsverfahren nach Anspruch 21, **dadurch gekennzeichnet, daß** bei Schritt 1/ ein Rohr aus Isoliermaterial (5) **dadurch** gebildet wird, daß zwei vorgeformte Halbrohre (15a, 15b) um die Innenleitung (3) herum aneinandergefügt werden.

23. Verfahren nach Anspruch 21 oder 22, **dadurch gekennzeichnet, daß** bei Schritt 3/ eine Falte (21) oder eine Vielzahl von entlang der Kanten (7₅) gleichmäßig und symmetrisch beabstandeten Falten an den Enden (8a, 8b) des rohrförmigen Komplexes ausgebildet wird.

24. Verfahren nach Anspruch 21 oder 22, **dadurch gekennzeichnet, daß** bei Schritt 1/ zuvor Falten (41) in der Innenwand (6) zwischen den Kanten (6₅) an den Enden (8a, 8b) der Innenwand (6) ausgebildet werden.
